# EUROPÄISCHE PATENTSCHRIFT

(11) **EP 2 402 793 B1**
(45) Veröffentlichungstag und Bekanntmachung des Hinweises auf die Patenterteilung: **04.04.2018**
(21) Anmeldenummer: 11005055.6
(22) Anmeldetag: 21.06.2011
(51) Int. Cl.: G01V 8/20

(54) **Verfahren zum gepulsten Betreiben einer Lichtschranke und Lichtschranke**
Method for pulsed operation of a light barrier and light barrier
Procédé de fonctionnement pulsé d'une barrière lumineuse et barrière lumineuse

(30) Priorität: 02.07.2010 DE 102010025929
(43) Veröffentlichungstag der Anmeldung: 04.01.2012
(73) Patentinhaber: Pantron Instruments GmbH, 31158 Bad Salzdetfurth (DE)
(72) Erfinder: Ottleben, Bernd, DE- 31126 Bad Saldetfurth (DE); Ottleben, Petra, DE- 31126 Bad Saldetfurth (DE); Mock, Bernward, DE- 31137 Hildesheim (DE)
(74) Vertreter: Friedrich, Andreas

(56) Entgegenhaltungen:
- EP-A1- 2 278 359
- JP-A- S5 863 879
- JP-A- S61 176 877
- US-A- 5 126 555
- US-A1- 2006 072 012

## Beschreibung

Die Erfindung betrifft ein Verfahren zum gepulsten Betreiben einer Lichtschranke sowie eine Lichtschranke.

Lichtschranken sind heute in zahlreichen Ausführungsformen bekannt. Sie können unterschiedliche Größen aufweisen und ganz unterschiedliche Zwecke erfüllen. Ein hier beispielhaft angeführtes Anwendungsgebiet von Lichtschranken ist das Erkennen der Kontur eines Kraftfahrzeuges innerhalb einer Autowaschanlage. Insbesondere bei der Trocknung des Fahrzeugs wird dabei die Kontur mit entsprechend beweglich angeordneten Lichtschranken abgetastet, um die Trocknung mit möglichst geringem Luft- und Energieaufwand zu gewährleisten.

Prinzipiell besitzen Lichtschranken einen optischen Sender, beispielsweise eine LED, sowie einen optischen Empfänger. Dieser Detektor enthält üblicherweise ein optisch empfindliches Bauelement, beispielsweise eine Fotodiode oder einen Fototransistor.

Bei diesen Bauelementen ist das Rauschen abhängig vom gemessenen Fotostrom, der wiederum abhängig ist von der einfallenden Lichtleistung. Die an einen nachfolgenden Verstärker weitergegebene Rauschleistung ist daher proportional zur einfallenden Lichtleistung.

Zur Abschirmung der Detektoren gegen den Einfall von störendem Tageslicht werden beispielsweise optische Filter eingesetzt. Problematisch ist jedoch, wenn beispielsweise Sonnenlicht mit den darin enthaltenen Infrarotwellenlängen auf direktem Wege auf den Detektor auftrifft. Dadurch erhöhen sich der Fotostrom, der im optisch empfindlichen Bauelement gemessen wird, und damit auch das damit verbundene Rauschen stark.

Der erhöhte Gleichstromanteil des Fotostromes kann dabei durch entsprechende Schaltungen abgetrennt werden. Das Rauschen bleibt jedoch vorhanden und wird dem eigentlichen Nutzsignal überlagert, so dass nun das Signal-Rauschverhältnis deutlich verschlechtert wird.

Insbesondere bei sehr kleinen Nutzsignalamplituden, wie sie beispielsweise bei Automatiklichtschranken üblich sind, führt dies zu einer Schwächung oder sogar zum zeitweiligen völligen Auslöschen des Nutzsignals. Daraus resultieren unsicheres Schaltverhalten und Funktionsstörungen bei der Lichtschranke. Insbesondere bei sehr schnell auftretendem Störlichteinfall besteht keine Möglichkeit, diesem durch Erhöhung der Sendeleistung durch die normale Regeltätigkeit der Automatik entgegenzutreten. Wenn die Lichtverhältnisse auf dem optisch empfindlichen Detektor sehr schnell wechseln, beispielsweise wenn das Sonnenlicht durch drehende Objekte, wie beispielsweise die rotierenden Bürsten einer Autowaschanlage, unterbrochen wird, kann es zu Funktionsstörungen der Lichtschranke kommen.

Aus der US 5 126 555 ist ein opto-elektronischer Schalter bekannt. Dieser Schalter verfügt dabei über einen anti-coincidence Schaltkreis, der dafür sorgt, dass der Schalter abgeschaltet wird, wenn er von externen Licht getroffen wird.

Aus der US 2006/0072012 A1 ist eine mehrfach Lichtschranke bekannt, bei der das Problem von Fehlalarmen behoben werden soll, die durch erhöhten externen Lichteinfall auftreten. Dazu ist eine Vorrichtung vorhanden, die die Menge von externen Licht, beispielsweise Sonnenlicht, misst und in helle Umgebungen und dunkle Umgebungen unterteilt.

Aus der JP S 58 63879 A ist eine Papiererkennungsvorrichtung bekannt, die über eine Lichtquelle Licht aussendet, dass von einem gegebenenfalls vorhandenen Papier reflektiert und so von einem Detektor aufgefangen werden kann. In Abhängigkeit von der Menge externen einfallenden Lichtes kann diese Vorrichtung in unterschiedlichen Betriebsmodi betrieben werden.

Der vorliegenden Erfindung liegt die daher die Aufgabe zugrunde, eine Lichtschranke sowie ein Verfahren zu ihrem Betreiben vorzustellen, mit dem Fremdlichteinfall auf dem optisch empfindlichen Detektor erkannt und schnell ausgeglichen werden kann. Die Erfindung löst die gestellte Aufgabe durch ein Verfahren zum gepulsten Betreiben einer Lichtschranke nach Anspruch 1. Im gepulsten Betrieb einer Lichtschranke sendet die Sendeeinrichtung jeweils nur in kurzen Sendezeiträumen, die beispielsweise 4 Millisekunden betragen. Am optisch empfindlichen Detektor, beispielsweise der Fotodiode, wird die einfallende Lichtleistung in einen Strom bzw. eine Spannung umgewandelt. Diese Ausgangsspannung des Detektors wird vorteilhafterweise zu Beginn des Sendezeitraumes auf Null gesetzt, um reproduzierbare Ergebnisse zu erreichen. Dadurch werden reproduzierbare Startbedingungen erreicht und eine Beeinflussung durch vorherige Messungen ausgeschlossen.

Im Verlauf des Sendezeitraumes steigt die Ausgangsspannung am Signaldetektor stetig an und sättigt bei einem Endwert. Dabei wird die Dauer des Sendezeitraumes mit den charakteristischen Eigenschaften der verwendeten Bauteile vorteilhafterweise so abgestimmt, dass die Spannung am Ende des Sendezeitraumes ihren Endwert erreicht. Am Ende des Sendezeitraumes erfolgt dann eine Analogmessung der Ausgangsspannung beispielsweise über einen AD-Wandler. Der gemessene Wert wird dann beispielsweise mittels einer Software mit einer vorgegebenen Schaltschwelle verglichen. Liegt der gemessene Spannungswert oberhalb der Schaltschwelle konnte die elektromagnetische Strahlung ungehindert von der Sendeeinrichtung zum Detektor gelangen und es befindet sich kein Hindernis in der Lichtschranke. Liegt der gemessene Spannungswert unterhalb der Schaltschwelle, muss davon ausgegangenen werden, dass sich ein Hindernis in der Lichtschranke befindet.

Fällt nun Fremdlicht, beispielsweise Sonnenlicht, direkt auf den Detektor, wird, wie bereits beschrieben, der Rauschanteil des Spannungssignals deutlich erhöht. Durch das erhöhte Empfängerrauschen zeigt die Ausgangsspannung am Detektor einen welligen Verlauf. Am Ende des Sendezeitraumes, an dem die Spannung gemessen wird, die anschließend mit der vorgegebenen Schaltschwelle verglichen wird, kann es dabei vorkommen, dass die zu messende Ausgangsspannung unterhalb der Schaltschwelle liegt, obwohl sich kein Hindernis in der Lichtschranke befindet. Der Schaltausgang würde daher den zu steuernden Vorgang abschalten, obwohl hierfür kein Anlass bestünde.

Um wieder einen glatten Verlauf der Spannungskurve am Ausgang des Detektors zu erreichen, müsste die Filterzeitkonstante erhöht werden. Dies würde jedoch bedeuten, dass das Spannungssignal am Ende des Sendezeitraumes gegebenenfalls noch nicht den Endwert erreicht hätte. Die Schaltschwelle würde dann gegebenenfalls nicht überschritten und die Lichtschranke würde an Reichweite verlieren. Alternativ könnte auch der Sendezeitraum verlängert werden, wodurch jedoch auch die Reaktionszeit der Lichtschranke erhöht würde.

Um dies zu verhindern, wird bei dem erfindungsgemäßen Verfahren nicht nur einmal am Ende des Sendezeitraumes die Spannung am Ausgang des Detektors gemessen. Vielmehr werden mehrere Strahlungsmesswerte zu verschiedenen Messzeitpunkten innerhalb des Messzeitraumes aufgenommen. Die daraus zu bildende Messwertkurve wird anschließend daraufhin untersucht, ob ein Fremdlichteinfall vorliegt. Ist dies der Fall, wird die Lichtschranke im nächsten Zyklus im Kompensationsmodus betrieben, in dem wenigstens eine Kompensationsmaßnahme durchgeführt wird, um den Einfluss des eingestrahlten Fremdlichtes zu kompensieren. Auf diese Weise ist es möglich, schnell auf Fremdlicht zu reagieren, ohne die oben erwähnten Nachteile in Kauf nehmen zu müssen.

Vorteilhafterweise sind bei der Lichtschranke mehrere Sendeeinrichtungen vorgesehen, denen jeweils ein Detektor zugeordnet ist. Jedes dieser Sendeeinrichtung-Detektorpaare bildet einen unabhängigen Lichtschrankenkanal. Um eine gegenseitige Beeinflussung durch Streulicht zwischen den einzelnen Kanälen auszuschließen, wird üblicherweise ein Zeitmultiplexverfahren angewendet. Dies bedeutet, dass alle Kanäle zeitlich nacheinander abgearbeitet werden, so dass auch der beschriebene Zyklus für jede Sendeeinrichtung und den ihr zugeordneten Detektor nacheinander durchlaufen wird. Dabei ist jeder Kanal beispielsweise für den Sendezeitraum von 4 ms aktiv. In dieser Zeit sind daher jeweils auch nur eine Sendeeinrichtung und der dazugehörige Detektor aktiv.

Die Gesamtreaktionszeit einer derartigen Mehrkanal-Lichtschranke ergibt sich aus der vorgesehenen Kanalauswertezeit, die die Zeit ist, die zur Verfügung steht, um die Auswertungsspannung des Signaldetektors zu filtern, und der Anzahl der vorgesehenen Kanäle. Die Kanalauswertezeit ist dabei im Wesentlichen der Sendezeitraum. Soll bis zur Schaltaussage nicht nur eine einzelne Messung durchgeführt werden, sondern beispielsweise über Messwerte der Ausgangsspannung am Ende des Auswertezeitraumes über mehrere Durchgänge gemittelt werden, muss die beschriebene Gesamtreaktionszeit noch mit der Anzahl der eingeräumten Durchgänge bis zur Schaltaussage multipliziert werden.

Unter praktischen Gesichtspunkten ist es ratsam, die Gesamtreaktionszeit einer Lichtschranke konstant zu halten. Daraus ergibt sich, dass bei vorgegebener Kanalanzahl, also vorgegebener Anzahl von Sendeeinrichtungen und Detektoren, auch die Kanalauswertezeit, und damit der Sendezeitraum, konstant gehalten werden muss. Insbesondere kann bei auftretenden Problemen diese nicht einfach verlängert werden. Dies ist mit dem erfindungsgemäßen Verfahren auch nicht mehr nötig, so dass auch bei auftretenden Problemen die Gesamtreaktionszeit auf einfache und verlässliche Weise konstant gehalten werden kann.

Erfindungsgemäß wird die Messwertkurve der aufgenommenen Messwerte auf eine positive Krümmung hin untersucht.

Bei einem ungestörten Kanal am Signaldetektor steigt die gemessene Spannung über den Sendezeitraum monoton an. Erst durch den Einfall von Fremdlicht und die dadurch hervorgerufene Überlagerung dieses ungestörten Signals mit einem relativ großen Rauschen kommt es zu einem welligen Verlauf der Ausgangsspannung des Detektors über den Sendezeitraum. Insbesondere im zweiten Teil des Sendezeitraumes kann daher ein ungestörter Spannungsverlauf von einem Spannungsverlauf mit Fremdlichtüberlagerung durch das Vorliegen einer positiven Krümmung unterschieden werden. Bei der Untersuchung auf eine positive Krümmung kann vorteilhafterweise die zweite Ableitung der Messwertkurve gebildet werden. Bei der Untersuchung können insbesondere folgende Schritte durchgeführt werden:
c1) Bilden der Messwertdifferenz vᵢ aus jeweils zwei Strahlungsmesswerten Iᵢ, Iᵢ₊₁, die zu aufeinander folgenden Messzeitpunkten aufgenommen wurden,
c2) Bilden der Differenz aᵢ aus jeweils zwei aufeinander folgenden Messwertdifferenzen vᵢ, vᵢ₊₁,
c3) Addieren aller Differenzen ai, die größer sind als Null, zu einer Summe A,
c4) Vergleichen der Summe A mit einem vorbestimmten Grenzwert A_{Grenz}.

Auch bei einem ungestörten Kanal kommt es im Spannungsverlauf im Signaldetektor zu einem Rauschen, das dem eigentlichen Messsignal überlagert ist. Dieses ist jedoch in der Amplitude deutlich kleiner als das Rauschen, das durch Fremdlichteinfall dem eigentlichen Messsignal überlagert wird.

Die Differenz ai, die im Verfahrensschritt c2) berechnet wird, entspricht, bis auf einen konstanten Faktor, der diskreten zweiten Ableitung der Messwertkurve. Ist diese Differenz positiv, liegt an der Stelle der Messwertkurve folglich eine positive Krümmung vor. Durch das Aufsummieren aller dieser positiven Krümmungen und Vergleich mit einem vorher festgesetzten Grenzwert ist gewährleistet, dass nicht bei jedem Auftreten einer positiven Krümmung, die beispielsweise auch durch das geringe Rauschen beim ungestörten Detektor auftreten kann, davon ausgegangen wird, dass Fremdlichteinfall vorliegt. Erst wenn die Summe aller positiven Krümmungen den vorbestimmten Grenzwert überschreitet, wird davon ausgegangen, dass ein Fremdlichteinfall vorliegt, so dass in den Kompensationsmodus der Lichtschranke umgeschaltet wird. Die Summe aller positiven Krümmungswerte ist ein direktes Maß für die Welligkeit und damit den Grad der Störung des Signals durch ein Rauschen. Dadurch, dass die mathematische Betrachtung der zweiten Ableitung der Kurve einfließt, hat weder die absolute Lage der Kurve, also die Stärke des gemessenen Signals, noch der monotone Anstieg am Beginn des Sendezeitraums einen Einfluss auf das Ergebnis.

Für jeden Durchlauf des Zyklusses entsteht ein neuer Messwert A für die Welligkeit. Zusätzlich kann auch ein gleitender Mittelwert dieser Welligkeiten über mehrere Kanaldurchläufe gebildet werden. Auch dieser kann benutzt werden, um weitere Kompensationsmaßnahmen auszubilden. Diese Möglichkeit ist insbesondere für sporadisch auftretendes Störlicht interessant.

Vorteilhafterweise wird die elektromagnetische Strahlung nach Frequenz und/oder Polarisation und/oder Phase gefiltert, bevor sie den Detektor erreicht. Beispielsweise kann ein moduliertes Licht, beispielsweise Infrarotlicht, mit festgelegter Frequenz von der Sendeeinrichtung ausgesandt werden. Trifft dieses Infrarotlicht auf den Detektor, wird es verstärkt und durch die Signalauswerteschaltung ausgewertet. Dabei werden nur solche Signale ausgewertet, die in Frequenz und Phase mit dem gesendeten Signal übereinstimmen. Auf diese Weise werden Einflüsse durch Streulicht und andere Störeinflüsse herausgefiltert.

Die wenigstens eine Kompensationsmaßnahme besteht beispielsweise in einer Steigerung der Sendeleistung. Die Sendeleistung ist insbesondere für jeden einzelnen Kanal variabel. Durch eine herkömmliche Automatikfunktion kann die Sendeleistung für jeden Kanal so geregelt werden, dass die der Sendeeinrichtung zugeordneten Empfänger immer ein gleich bleibend starkes Signal erhalten. Dadurch werden beispielsweise Verschmutzungen an den Sensoren automatisch ausgeglichen. Das Leistungsniveau der Sendeleistung ist dabei immer so gering wie möglich, um die Schaltempfindlichkeit hoch und konstant zu halten. Dies ist jedoch nur für langsam auftretende Verschmutzungen möglich, die kontinuierlich ausgeregelt werden. Eine schnell auftretende Signaldämpfung wird als Schaltvorgang interpretiert, weswegen auch direkt einfallendes Sonnenlicht, wie bereits beschrieben, zu einem Schaltvorgang führen kann. Wird durch ein erfindungsgemäßes Verfahren festgestellt, dass Fremdlicht in den Detektor einfällt, wird dies nicht als Schaltvorgang interpretiert, sondern führt beispielsweise zum Anheben der Sendeleistung um einen vorher festgelegten Betrag. Dadurch erhält der Detektor im nächsten Zyklus sofort ein stärkeres Signal. Dadurch verbessert sich das Signal-Rauschverhältnis. Zudem ist dadurch sichergestellt, dass am Ende des Sendezeitraums die am Detektorausgang gemessene Spannung oberhalb der Schaltschwelle liegt, sofern sich kein Hindernis im Strahlengang der Lichtschranke befindet.

Sobald das Störlicht nachlässt, kann entweder die Automatikfunktion die Sendeleistung auf den ursprünglichen Wert schrittweise zurückregeln oder die Lichtschranke im nächsten Zyklus im Normalmodus betrieben werden, so dass die im Kompensationsmodus veranlasste Leistungssteigerung nicht mehr durchgeführt wird.

Alternativ dazu oder zusätzlich kann die wenigstens eine Kompensationsmaßnahme auch eine Erhöhung der Hysterese sein. Die festgelegten Schwellenwerte für das Ein- bzw. Ausschalten des Schaltausgangs können dabei etwas weiter auseinander gezogen werden. Dadurch erhöht sich die Hysterese und der Schaltausgang wird unempfindlicher gegen die Signalwelligkeit. Auch dadurch werden Funktionsstörungen durch die Welligkeit aufgrund einfallenden Fremdlichtes vermieden. Wird in einem folgenden Zyklus festgestellt, dass kein Fremdlicht mehr auf den Detektor einfällt, wird die Lichtschranke im nächsten Zyklus wieder im Normalmodus betrieben, so dass die Schwellenwerte für das Ein- bzw. Ausschalten des Schaltausganges wieder auf ihre ursprünglichen Werte zurückgesetzt werden.

Als weitere mögliche Kompensationsmaßnahmen kommt beispielsweise das Bilden eines Signalmittelwertes in Frage. Anders als im ungestörten Betrieb, bei dem immer der analoge Messwert am Ende des Auswertezeitraums verwendet wird, weil die Ausgangsspannung am Detektor dann ihren höchsten Wert erreicht hat, ist dies beim Einfall von Fremdlicht nicht mehr der Fall. Wie bereits beschrieben, kann der analoge Messwert dann auch unterhalb der Schaltschwelle liegen, obwohl sich kein Hindernis im Strahlengang der Lichtschranke befindet. Wird bei einem Zyklus Fremdlicht auf dem Detektor erkannt, kann daher ein Mittelwert aus mehreren Abtastwerten zum Ende des Auswertezeitraumes gebildet werden. Wird der Mittelwert aus verschiedenen Strahlungsmesswerten zum Ein- bzw. Ausschalten des Schaltausganges verwendet, ist das Ergebnis durch eine kurzzeitige zufällige Schwankung aufgrund eines Rauschens nicht so stark beeinflusst. Anstatt nur den aktuellen Messwert der Ausgangsspannung am Detektor in diesem Zyklus zu verwenden, kann auch der Mittelwert über mehrere dieser Messwerte aus den vergangenen Zyklen gebildet werden. Auch dadurch wird der Einfluss einer kurzzeitigen zufälligen Schwankung reduziert. Es erhöht sich jedoch die Gesamtreaktionszeit geringfügig.

Insbesondere bei sporadischem Fremdlicht kann auch eine Schaltverzögerung um einige Zyklen aktiviert werden, was ebenfalls zur Stabilisierung des Schaltverhaltens beiträgt. Auch dadurch verlängert sich jedoch die Gesamtreaktionszeit.

Wird in einem Zyklus, in dem die Lichtschranke im Kompensationsmodus betrieben wird, festgestellt, dass kein Fremdlicht mehr auf den Detektor einfällt, werden alle Kompensationsmaßnahmen wieder fallengelassen und die Lichtschranke im nächsten Zyklus im Normalmodus weiter betrieben.

Eine erfindungsgemäße Lichtschranke umfasst wenigstens eine Sendeeinrichtung und wenigstens einen Detektor und eine elektrische Steuerung, die eingerichtet ist zum Durchführen eines oben beschriebenen Verfahrens. Mit einer derartigen Lichtschranke kann kurzfristig und sicher auf direkt auf den Detektor einfallendes Fremdlicht reagiert werden, ohne dass die Gesamtreaktionszeit der Lichtschranke erhöht wird oder es zu Funktionsstörungen kommt. Eine derartige Lichtschranke ist insbesondere eine Mehrkanal-Lichtschranke, die eine Mehrzahl von Sendeeinrichtungen umfasst, denen jeweils ein Detektor zugeordnet ist. Vor jedem dieser Detektoren befindet sich vorteilhafterweise wenigstens ein Filter, der einfallende elektromagnetische Strahlung nach Frequenz und/oder Polarisation und/oder Phase filtert. Auf diese Weise ist eine bessere Abkopplung des Detektors von Störeinflüssen, wie beispielsweise Streulicht, gewährleistet.

Mit Hilfe einer Zeichnung wird nachfolgend ein Ausführungsbeispiel der vorliegenden Erfindung näher erläutert. Es zeigen:
- Fig. 1: - den schematischen Aufbau einer Mehrkanal-Lichtschranke,
- Fig. 2: - den Signalverlauf am Detektor bei einem ungestörten Kanal,
- Fig. 3: - den Signalverlauf am Detektor bei einem durch Fremdlicht gestörten Kanal,
- Fig. 4: - den schematischen Verlauf des Signals am Detektor mit der mehrfachen Aufnahme von Messwerten gemäß einem Ausführungsbeispiel der vorliegenden Erfindung.

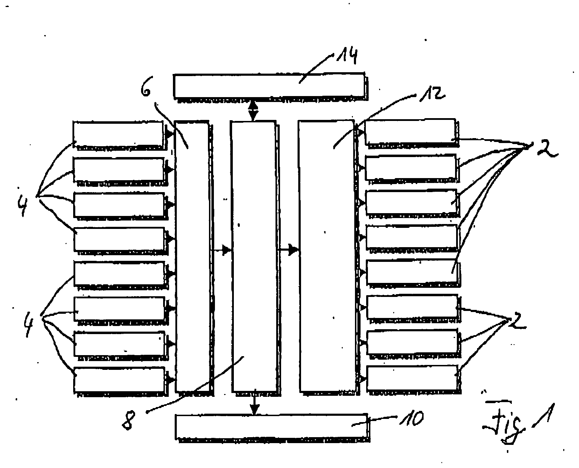

Figur 1 zeigt den schematischen Aufbau einer Mehrkanal-Lichtschranke. Diese umfasst im in Fig. 1 gezeigten Ausführungsbeispiel acht Sendeeinrichtungen 2, deren ausgesandte elektromagnetische Strahlung von acht Detektoren 4 empfangen wird.

Über einen ersten Zeitmultiplexer 6 wird sichergestellt, dass immer nur ein Detektor aktiv geschaltet ist, also sein Signal an eine Signalauswerteeinrichtung 8 weitergeben kann. In dieser Signalauswerteeinrichtung 8 findet sowohl die Auswertung der aufgenommenen Messsignale bezüglich des Vorliegens von Fremdlichteinfall als auch bezüglich der Frage statt, ob sich im Strahlengang der Lichtschranke ein Hindernis befindet oder nicht. Je nachdem, ob ein Gegenstand im Strahlengang der Lichtschranke detektiert wurde oder nicht, wird der Schaltausgang 10 der Lichtschranke angesteuert. Wird ein Fremdlichteinfall auf den Detektor festgestellt, wird beispielsweise über eine Sendestromregelung 12 beispielsweise die Sendeleistung der von den Sendern 2 ausgestrahlten elektromagnetischen Strahlung verändert oder eine sonstige Kompensationsmaßnahme ergriffen. Auch die Umschaltung der Lichtschranke zwischen Normalmodus und Kompensationsmodus findet hier statt. In die Sendestromregelung 12 integriert ist ein weiterer Multiplexer, der dafür sorgt, dass jeweils nur einer der Sender 2 aktiv geschaltet ist.

Über eine Benutzerschnittstelle 14 kann die Lichtschranke bedient und/oder programmiert werden. Insbesondere kann hier beispielsweise ausgewählt werden, welche Kompensationsmaßnahme angewendet werden soll, sobald sich die Lichtschranke im Kompensationsmodus befindet.

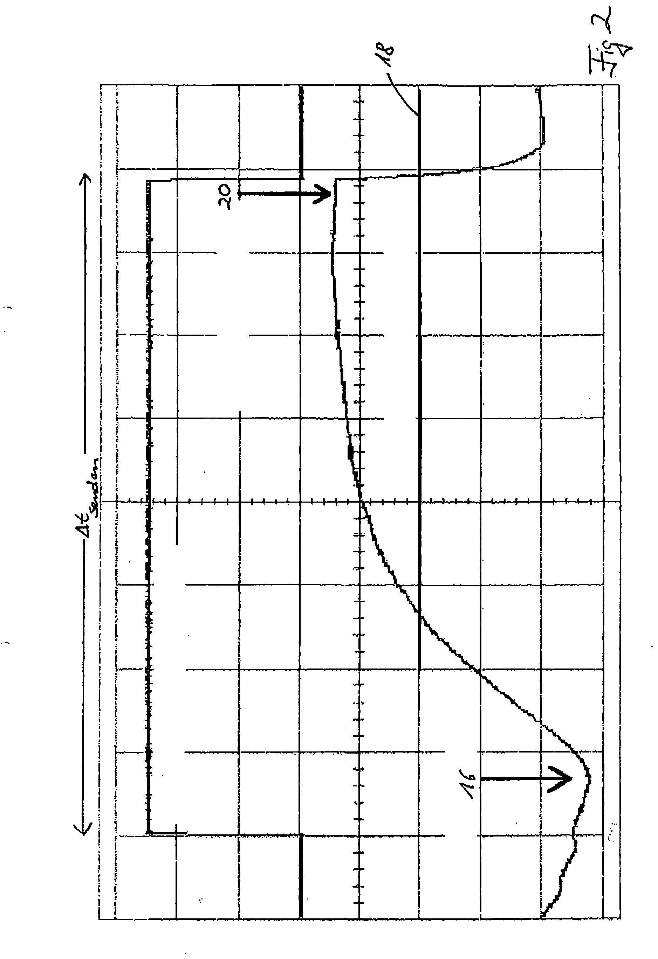

Figur 2 zeigt den Signalverlauf am Ausgang eines Detektors über den Auswertezeitraum hinweg. Die obere Kurve illustriert dabei den Sendezeitraum Δt_{Senden} über den eine Sendeeinrichtung 2 elektromagnetische Strahlung in Richtung auf den ihr zugeordneten Detektor 4 abgibt. Die untere Kurve in Figur 2 zeigt den Spannungsverlauf am Ausgang des Detektors 4 bei einem ungestörten Kanal. Zu einem Kalibrierzeitpunkt 16 wird die Filterspannung auf Null gesetzt, um reproduzierbare Startbedingungen zu gewährleisten und eine Beeinflussung durch einen vorhergehenden Kanal oder einen vorhergehenden Zyklus auszuschließen. Die Kurve steigt monoton an und überschreitet eine Schaltschwelle 18, so dass der Spannungswert am Ausgang des Detektors 4 am Ende des Sendezeitraums Δt_{Senden} zum Messzeitpunkt 20 einen maximalen Wert erreicht. In dem in Figur 2 gezeigten Ausführungsbeispiel befindet sich kein Hindernis im Strahlengang der Lichtschranke.

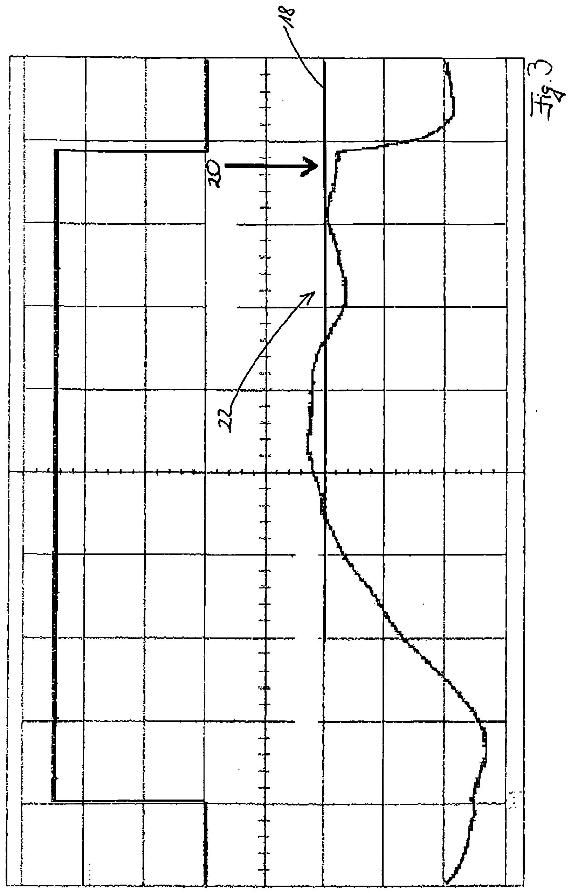

Figur 3 zeigt den Spannungsverlauf am Ausgang eines Detektors 4 bei einem durch Fremdlichteinfall gestörten Kanal. Auch in Figur 3 zeigt die obere Kurve wieder den Sendezeitraum, über den eine Sendeeinrichtung 2 elektromagnetische Strahlung aussendet. Deutlich zu erkennen ist, dass der Spannungswert nicht über die gesamte Zeitspanne monoton ansteigt, sondern insbesondere im zweiten Teil des Sendezeitraumes Δt_{Senden} eine deutliche Welligkeit 22 aufweist.

Auch im in Figur 3 gezeigten Beispiel wird zu einem Messzeitpunkt 20 die Spannung am Ausgang des Detektors 4 gemessen. In diesem Beispiel liegt der gemessene Spannungswert unterhalb der Schaltschwelle 18, so dass bei diesem Ergebnis davon ausgegangen werden muss, dass sich ein Hindernis im Strahlengang der Lichtschranke befindet. Dies ist jedoch nicht der Fall, da die Absenkung des Spannungswertes allein auf die Überlagerung des Messsignales durch das verstärkte Rauschen durch Fremdlichteinfall zurückzuführen ist.

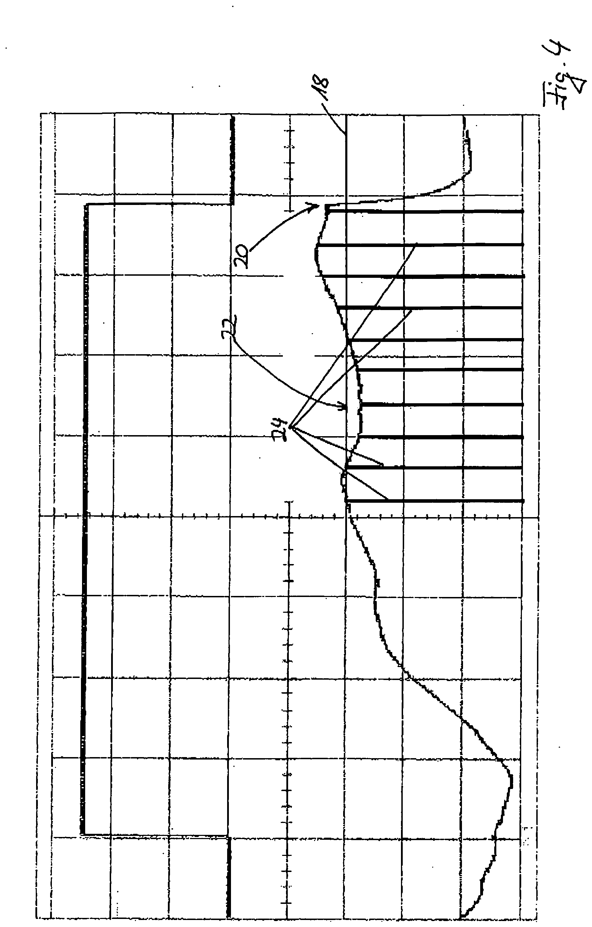

Figur 4 zeigt die Situation aus Figur 3, bei der nun nicht nur an einem Messzeitpunkt 20 der Spannungswert am Ausgang des Detektors 4 gemessen wird, sondern bereits zu verschiedenen weiteren Messzeitpunkten 24 ein Spannungswert ermittelt wird. Aus diesen Messwerten wird eine Messwertkurve erstellt, die dann auf das Vorliegen einer Welligkeit 22 hin untersucht wird. Wird eine derartige Welligkeit, wie in Figur 4 gezeigt, festgestellt, wird davon ausgegangen, dass ein Fremdlichteinfall auf den Detektor 4 vorliegt, so dass die Lichtschranke in den Kompensationsmodus umgeschaltet wird. Hier können die bereits beschriebenen Kompensationsmaßnahmen ergriffen werden, um den Effekt der Welligkeit 22 auf das Messergebnis zu kompensieren.

### Bezugszeichenliste

- 2: Sendeeinrichtung
- 4: Detektor
- 6: Erster Zeitmultiplexer
- 8: Signalauswerteeinrichtung
- 10: Schaltausgang
- 12: Sendestromregelung und zweiter Zeitmultiplexer
- 14: Benutzerschnittstelle
- 16: Kalibrierzeitpunkt
- 18: Schaltschwelle
- 20: Messzeitpunkt
- 22: Welligkeit
- 24: Weiterer Messzeitpunkt

## Patentansprüche

1. Verfahren zum gepulsten Betreiben einer Lichtschranke, die in einem Normalmodus und in einem Kompensationsmodus betreibbar ist, wobei ein Zyklus wiederholt durchlaufen wird, der die folgenden Schritte umfasst:
a) Aussenden elektromagnetischer Strahlung über einen Sendezeitraum Δt_{Senden} mittels einer Sendeeinrichtung (2),
b) Aufnehmen von Strahlungsmesswerten lᵢ der elektromagnetischen Strahlung zu verschiedenen Messzeitpunkten t_{Mess} (24) innerhalb des Sendezeitraums Δt_{Senden} mittels eines Detektors (4),
c) Feststellen, ob ein Fremdlichteinfall auf dem Detektor (4) vorliegt durch Untersuchen einer Messwertkurve der aufgenommenen Strahlungsmesswerte lᵢ,
wobei der jeweils nächste Zyklus im Normalmodus durchlaufen wird, wenn kein Fremdlichteinfall vorliegt und im Kompensationsmodus durchlaufen wird, wenn ein Fremdlichteinfall vorliegt, wobei im Kompensationsmodus wenigstens eine Kompensationsmaßnahme durchgeführt wird, um den Einfluss von Fremdlicht zu kompensieren, **dadurch gekennzeichnet dass** die Messwertkurve auf eine positive Krümmung hin untersucht wird.

2. Verfahren nach Anspruch 1, **dadurch gekennzeichnet, dass** mehrere Sendeeinrichtungen (2) vorgesehen sind, denen jeweils ein Detektor (4) zugeordnet ist, und der Zyklus für jede Sendeeinrichtung (2) und den ihr zugeordneten Detektor (4) nacheinander durchlaufen wird.

3. Verfahren nach Anspruch 1 oder 2, **dadurch gekennzeichnet, dass** zur Untersuchung der Messwertkurve auf eine positive Krümmung hin folgende Schritte durchgeführt werden:
c1) Bilden der Messwertdifferenz vᵢ aus jeweils zwei Strahlungsmesswerten Iᵢ, Iᵢ₊₁, die zu aufeinander folgenden Messzeitpunkten t_{Mess} aufgenommen wurden,
c2) Bilden der Differenz ai aus jeweils zwei aufeinander folgenden Messwertdifferenzen vᵢ, vᵢ₊₁,
c3) Addieren aller Differenzen ai, die größer sind als Null, zu einer Summe A,
c4) Vergleichen der Summe A mit einem vorbestimmten Grenzwert A_{G-renz}.

4. Verfahren nach einem der vorstehenden Ansprüche, **dadurch gekennzeichnet, dass** die elektromagnetische Strahlung nach Frequenz und/oder Polarisation und/oder Phase gefiltert wird, bevor sie den Detektor (4) erreicht.

5. Verfahren nach einem der vorstehenden Ansprüche, **dadurch gekennzeichnet, dass** die wenigstens eine Kompensationsmaßnahme eine Steigerung der Sendeleistung der ausgesandten elektromagnetischen Strahlung umfasst.

6. Verfahren nach einem der vorstehenden Ansprüche, **dadurch gekennzeichnet, dass** die wenigstens eine Kompensationsmaßnahme eine Erhöhung der Hysterese umfasst.

7. Lichtschranke mit wenigstens einer Sendeeinrichtung (2) und wenigstens einem Detektor (4) und einer elektrischen Steuerung, die eingerichtet ist zum Durchführen eines Verfahrens nach einem der vorstehenden Ansprüche.

8. Lichtschranke nach Anspruch 7, **dadurch gekennzeichnet, dass** eine Mehrzahl von Sendeeinrichtungen (2) vorgesehen ist, denen jeweils ein Detektor (4) zugeordnet ist.

9. Lichtschranke nach Anspruch 7 oder 8, **dadurch gekennzeichnet, dass** vor jedem Detektor (4) wenigstens ein Filter angeordnet ist, der einfallende elektromagnetische Strahlung nach Frequenz und/oder Polarisation und/oder Phase filtert.

## Claims

1. A method for the pulsed operation of a light barrier that can be operated in a normal mode and in a compensation mode, there being run through repeatedly a cycle that comprises the following steps:
a) transmitting electromagnetic radiation over a transmission period Δtₜᵣₐₙₛₘᵢₜ by means of a transmission device (2),
b) recording measured radiation values lᵢ of the electromagnetic radiation at various measurement times tmeas (24) within the transmission period Δtₜᵣₐₙₛₘᵢₜ by means of a detector (4), and
c) establishing whether extraneous light is incident on the detector (4) by examining a measured value curve of the recorded measured radiation values lᵢ,
the respectively next cycle in the normal mode being run through when no extraneous light is incident, and in the compensation mode when extraneous light is incident, at least one compensation measure being carried out in the compensation mode in order to compensate the influence of extraneous light, **characterized in that** the measured value curve is examined for a positive curvature.

2. The method as claimed in claim 1, wherein a plurality of transmission devices (2) which are respectively assigned a detector (4) are provided, and the cycle is run through successively for each transmission device (2) and the detector (4) assigned to it.

3. The method as claimed in claim 1 or 2, wherein the following steps are carried out in order to examine the measured value curve for a positive curvature:
c1) forming the measured value difference vᵢ from in each case two measured radiation values lᵢ, lᵢ₊₁ that can be recorded at consecutive measurement times tmeas,
c2) forming the difference ai from in each case two consecutive measured value differences vᵢ, vᵢ₊₁,
c3) adding all the differences ai that are greater than zero to form a total A, and
c4) comparing the total A with a predetermined limit value A_{Limit}.

4. The method as claimed in one of the preceding claims, wherein, before it reaches the detector (4), the electromagnetic radiation is filtered according to frequency and/or polarization and/or phase.

5. The method as claimed in one of the preceding claims, wherein the at least one compensation measure comprises increasing the transmitted power of the emitted electromagnetic radiation.

6. The method as claimed in one of the preceding claims, wherein the at least one compensation measure comprises raising the hysteresis.

7. A light barrier having at least one transmission device (2) and at least one detector (4) and an electrical controller that is set up to carry out a method as claimed in one of the preceding claims.

8. The light barrier as claimed in claim 8, wherein a plurality of transmission devices (2) which are respectively assigned a detector (4) are provided.

9. The light barrier as claimed in claim 8 or 9, wherein arranged upstream of each detector (4) is at least one filter that filters the incident electromagnetic radiation according to frequency and/or polarization and/or phase.

## Revendications

1. Procédé de fonctionnement pulsé d'une barrière lumineuse qui est susceptible de fonctionner dans un mode normal et dans un mode de compensation, dans lequel un cycle est parcouru en récurrence qui comprend les étapes suivantes consistant à :
a) émettre un rayonnement électromagnétique pendant une période d'émission Δt_{émission} à l'aide d'un moyen émetteur (2),
b) recevoir des valeurs de rayonnement mesurées lᵢ du rayonnement électromagnétique à différents instants de mesure tmesure (24) à l'intérieur de la période d'émission Δt_{émission} à l'aide d'un détecteur (4),
c) constater s'il se présente une incidence de lumière externe sur le détecteur (4) par analyse d'une courbe de valeurs mesurées des valeurs de rayonnement mesurées reçues lᵢ,
dans lequel
le prochain cycle respectif est parcouru en mode normal lorsqu'il n'y a pas d'incidence de lumière externe et est parcouru en mode de compensation lorsqu'il y a une incidence de lumière externe, et en mode de compensation au moins une opération de compensation est effectuée pour compenser l'influence de la lumière externe,
**caractérisé en ce que**
la courbe de valeurs mesurées est analysée vis-à-vis d'une courbure positive.

2. Procédé selon la revendication 1,
**caractérisé en ce que**
il est prévu plusieurs moyens émetteurs (2) auxquels est associé un détecteur respectif (4), et le cycle est parcouru successivement pour chaque moyen émetteur (2) et pour le détecteur (4) qui lui est associé.

3. Procédé selon la revendication 1 ou 2,
**caractérisé en ce que**
pour analyser la courbe de valeurs mesurées vis-à-vis d'une courbure positive, on met en oeuvre les étapes suivantes consistant à :
c1) former une différence vᵢ de deux valeurs de rayonnement mesurées respectives lᵢ, lᵢ₊₁ qui ont été prises à des instants de mesure mutuellement SUCCeSSifS tₘₑₛᵤᵣₑ,
c2) former la différence ai de deux différences de valeurs mesurées vᵢ, vᵢ₊₁ respectives successives,
c3) additionner toutes les différences ai qui sont supérieures à zéro pour former une somme A,
c4) comparer la somme A avec une valeur limite prédéterminée Aₗᵢₘᵢₜₑ.

4. Procédé selon l'une des revendications précédentes,
**caractérisé en ce que**
le rayonnement électromagnétique est filtré selon la fréquence et/ou la polarisation et/ou la phase avant d'atteindre le détecteur (4).

5. Procédé selon l'une des revendications précédentes,
**caractérisé en ce que**
ladite au moins une opération de compensation inclut une croissance de la puissance d'émission du rayonnement électromagnétique émis.

6. Procédé selon l'une des revendications précédentes,
**caractérisé en ce que**
ladite au moins une opération de compensation inclut une augmentation de l'hystérésis.

7. Barrière lumineuse comportant au moins un moyen émetteur (2) et au moins un détecteur (4) et une commande électrique, qui est conçue pour mettre en oeuvre un procédé selon l'une des revendications précédentes.

8. Barrière lumineuse selon la revendication 7,
**caractérisée en ce que**
il est prévu une pluralité de moyens émetteurs (2) auxquels est associé un détecteur respectif (4).

9. Barrière lumineuse selon la revendication 7 ou 8,
**caractérisée en ce que**
au moins un filtre est agencé en avant de chaque détecteur (4), qui filtre un rayonnement électromagnétique incident selon la fréquence et/ou la polarisation et/ou la phase.
